(19) Europäisches Patentamt
European Patent Office
Office européen des brevets

(11) EP 3 040 937 A1

(12) EUROPEAN PATENT APPLICATION
published in accordance with Art. 153(4) EPC

(43) Date of publication:
06.07.2016 Bulletin 2016/27

(51) Int Cl.:
G06Q 50/10 (2012.01)

(21) Application number: 14850497.0

(22) Date of filing: 03.10.2014

(86) International application number:
PCT/JP2014/076533

(87) International publication number:
WO 2015/050242 (09.04.2015 Gazette 2015/14)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 04.10.2013 JP 2013209691

(71) Applicant: Mitsubishi Heavy Industries Mechatronics Systems, Ltd.
Kobe-shi, Hyogo 652-0863 (JP)

(72) Inventors:
• KOZAWA Hiroyuki
  Tokyo 108-8215 (JP)
• MURATA Tomohiro
  Tokyo 108-8215 (JP)

(74) Representative: Henkel, Breuer & Partner Patentanwälte
Maximiliansplatz 21
80333 München (DE)

(54) CAR SHARING MANAGEMENT DEVICE, CAR SHARING MANAGEMENT METHOD, AND PROGRAM

(57)   Provided is a car sharing management device, comprising: a crowding computation unit which, based on vehicle use information relating to use of subject vehicles for car sharing, and parking lot use information relating to use of parking areas wherein the subject vehicles are parked, derives the crowding of the parking areas; and an empty space determination unit which, based on the crowding which the crowding computation unit has derived, determines, at present or in the future, whether a parking area exists wherein one or more empty spaces cannot be secured or the probability is high that one or more empty spaces cannot be secured.

FIG. 2

## Description

[Technical Field]

The present invention relates to a car sharing management device, a car sharing management method, and a program.

Priority is claimed on Japanese Patent Application No. 2013-209691, filed October 4, 2013, the content of which is incorporated herein by reference.

[Background Art]

Car sharing systems in which vehicles for car sharing are shared by many people becomes widespread. Such vehicles are parked in parking lots that are prepared for parking of vehicles for car sharing. In recent years, parking lots for car sharing have increased and promotion of use of car sharing systems is expected.

In car sharing systems, for example, users themselves perform a use reservation by designating a rental parking lot and a return parking lot. Therefore, using a key rented in advance, users board a vehicle parked in the rental parking lot, and return it to the return parking lot.

For example, as a car station load balancing system for balancing a use load of car stations for car sharing, there is a system in which, when a reservation of a shared car is received, if a destination car station is crowded, an alternative car station is presented to a member's terminal (for example, refer to Patent Literature 1).

In addition, there is a system in which a notification requesting to separately board a plurality of parked vehicles when vehicles parked in a parking lot are boarded is transmitted (for example, refer to Patent Literature 2).

Further, there is a system in which, in order to equalize the number of parked vehicles in a plurality of parking lots in which vehicles for car sharing are parked, a predetermined benefit is assigned to a user who moves a vehicle from a predetermined movement source car port to a predetermined movement destination car port within a time limit (for example, refer to Patent Literature 3).

Furthermore, as a rental car allocation system configured to manage rental car allocation in a controlled area, there is a system in which, in order to ensure the number of stored vehicles necessary before the next day of work starts, a reduced fee less than a regular fee is transmitted to users (for example, refer to Patent Literature 4).

[Citation List]

[Patent Literature]

[Patent Literature 1] Japanese Unexamined Patent Application, First Publication No. 2012-215921
[Patent Literature 2] Japanese Unexamined Patent Application, First Publication No. 2013-30016
[Patent Literature 3] Japanese Unexamined Patent Application, First Publication No. 2010-170293
[Patent Literature 4] Japanese Unexamined Patent Application, First Publication No. 2012-150654

[Summary of Invention]

[Technical Problem]

However, in car sharing systems, vehicles for car sharing are used for a shorter time and a shorter distance than rental cars in many cases, and the number of vehicles parked in parking lots for car sharing is irregular. Therefore, deviations in the numbers of parked vehicles in parking lots are likely to occur, and there is a possibility of use of car sharing being limited. For example, in drop-off use in which a rental parking lot and a return parking lot are different, parking lots such as those in front of a station or nearby a large scale commercial facility are predicted to be preferred as return parking lots. In this case, when parking lots such as those in front of a station or nearby a large scale commercial facility remain fully occupied, since drop-off use is not possible in such parking lots, a selectable range of the return parking lot is limited, and there is a possibility of use of car sharing being less smooth.

The present invention provides a car sharing management device, a car sharing management method, and a program through which it is possible to detect a parking lot which could restrain smooth use of a vehicle for car sharing among a plurality of parking lots in which vehicles for car sharing are to be parked.

[Solution to Problem]

According to a first aspect of the present invention, a car sharing management device includes a congestion state computation unit configured to determine a congestion state of a parking lot area based on vehicle use information about use of a target vehicle for car sharing and parking lot use information about use of the parking lot area in which the target vehicle is parked, and an empty space judgement unit configured to judge whether a parking lot area which is presently fully occupied or which is predicted to be fully occupied in the future exists based on the congestion state determined by the congestion state computation unit.

According to a second aspect of the present invention, the car sharing management device according to the first aspect further includes a use promotion processing-unit configured to perform a use promotion process for promoting use of the parking lot area which is judged to be fully occupied by the empty space judgement unit.

According to a third aspect of the present invention, in the car sharing management device according to the second aspect, as the use promotion process, the use promotion processing-unit performs (i) a process of assigning an incentive for use of a target vehicle parked in the parking lot area which is judged to be fully occupied or (ii) a process of providing an announcement regarding use of the target vehicle parked in the parking lot area which is judged to be fully occupied to a user.

According to a fourth aspect of the present invention, in the car sharing management device according to the third aspect, the use promotion processing-unit selects a candidate on whom the use promotion process is performed based on a predetermined probability of moving depending on incentive assigning conditions.

According to a fifth aspect of the present invention, the car sharing management device according to any one of the first to fourth aspects further includes a use reservation reception unit configured to restrain reception of a reservation for dropping off the target vehicle at the parking lot area which is judged to be fully occupied by the empty space judgement unit.

According to a sixth aspect of the present invention, in the car sharing management device according to any one of the first to fifth aspects, the congestion state computation unit determines a congestion state of the parking lot area based on a current use state and a predicted use state of the parking lot area.

According to a seventh aspect of the present invention, in the car sharing management device according to any one of the first to sixth aspects, the congestion state computation unit determines a congestion state of the parking lot area based on at least any of reservation information of the parking lot area, reservation information of the target vehicle, a past use result of the parking lot area, a past use result of the target vehicle, area characteristics of the parking lot area, weather information of the parking lot area, traffic information near the parking lot area and event information near the parking lot area.

According to an eighth aspect of the present invention, a car sharing management method includes determining a congestion state of a parking lot area based on vehicle use information about use of a target vehicle for car sharing and parking lot use information about use of the parking lot area in which the target vehicle is parked and judging whether a parking lot area which is presently fully occupied or which is predicted to be fully occupied in the future exists based on the congestion state.

According to a ninth aspect of the present invention, a program causes a computer to function as a congestion state computation unit configured to determine a congestion state of a parking lot area based on vehicle use information about use of a target vehicle for car sharing and parking lot use information about use of the parking lot area in which the target vehicle is parked and an empty space judgement unit configured to judge whether a parking lot area which is presently fully occupied or which is predicted to be fully occupied in the future exists based on the congestion state determined by the congestion state computation operation.

[Advantageous Effects of Invention]

According to the car sharing management device, the management method, and the program described above, a deviation in the number of parked vehicles in a plurality of parking lots for car sharing is able to be detected.

[Brief Description of Drawings]

Fig. 1 is a schematic diagram showing an exemplary car sharing management system according to one embodiment of the present invention.
Fig. 2 is a block diagram showing an exemplary configuration of a car sharing management device according to one embodiment of the present invention.
Fig. 3 is a diagram showing an exemplary car sharing vehicle information table stored in a car sharing operation database according to one embodiment of the present invention.
Fig. 4 is a diagram showing an exemplary car sharing parking lot information table stored in a parking lot operation database according to one embodiment of the present invention.
Fig. 5 is a diagram showing an exemplary reservation information table stored in a reservation information database according to one embodiment of the present invention.
Fig. 6 is a diagram showing an exemplary incentive condition table stored in an incentive condition database according to one embodiment of the present invention.
Fig. 7 is a flowchart showing an exemplary car sharing management method according to one embodiment of the present invention.
Fig. 8 is a diagram showing an example of the number of target vehicles parked in parking lots according to one embodiment of the present invention.
Fig. 9 is a diagram showing another example of the number of target vehicles parked in parking lots according to one embodiment of the present invention.
Fig. 10 is a flowchart showing an exemplary crowded parking lot list creation process included in the flowchart shown in Fig. 7.
Fig. 11 is a flowchart showing an exemplary use promotion process included in the flowchart shown in Fig. 7.
Fig. 12 is a diagram showing another example of the number of target vehicles parked in parking lots according to one embodiment of the present invention.
Fig. 13 is a diagram showing exemplary parking lot areas in a second embodiment of the present invention.
Fig. 14 is a diagram showing exemplary parking lots in a third embodiment of the present invention.

[Description of Embodiments]

(First embodiment)

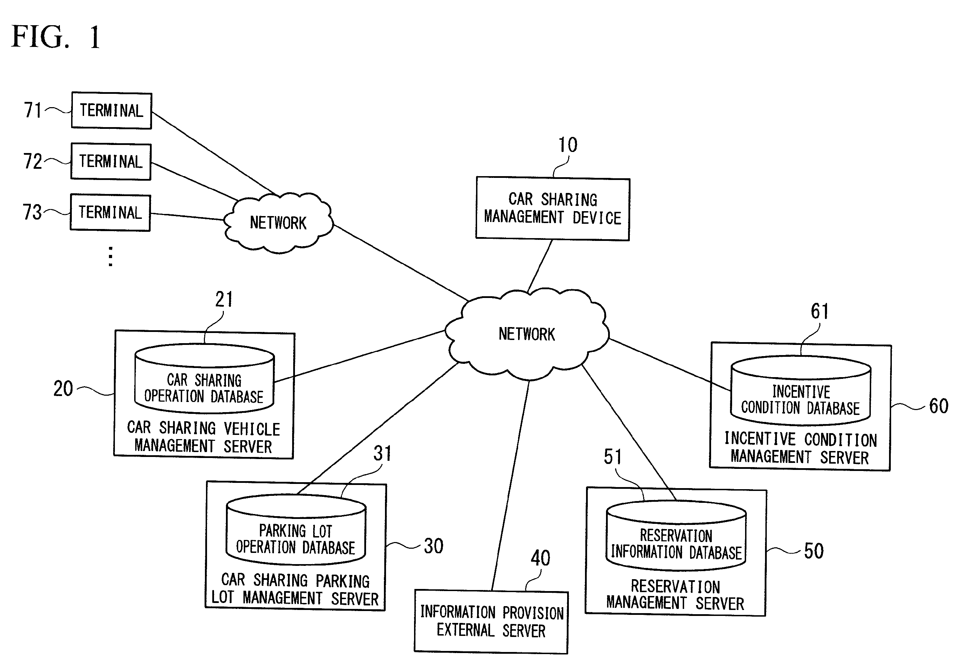

Hereinafter, an exemplary car sharing management system according to the first embodiment of the present invention will be described with reference to the drawings. Fig. 1 is a schematic diagram showing an exemplary car sharing management system according to the first embodiment of the present invention.

As shown in Fig. 1, the car sharing management system according to the first embodiment of the present invention includes a car sharing management device 10, a car sharing vehicle management server 20, a car sharing parking lot management server 30, an information provision external server 40, a reservation management server 50, an incentive condition management server 60, and a plurality of terminals 71, 72, and 73, which are connected to one another via a network. The car sharing management system according to the first embodiment of the present invention is, for example, a system configured to manage target vehicles for car sharing parked in parking lots for car sharing, and is a system in which a user himself or herself performs processes of reserving and returning a target vehicle. The user performs a use reservation of a target vehicle by designating a parking lot from which to rent the target vehicle (hereinafter referred to as a "parking lot at a departure point"), a parking lot to which to return the target vehicle (hereinafter referred to as a "parking lot at an arrival point"), a departure time and an arrival time. In the car sharing management system according to the present embodiment, a reservation in which the parking lot at the departure point and the parking lot at the arrival point are different is possible, that is, it is possible to drop off the target vehicle.

The car sharing management device 10 performs a process of preparing at least one empty space to park the moved target vehicle moved to a parking lot for car sharing based on a congestion state of the parking lot. The congestion state of the parking lot refers to information indicating a degree of congestion of target vehicles parked in the parking lot for car sharing. In the present embodiment, the congestion state of the parking lot is represented by the number of parked vehicles in the parking lot for car sharing. The congestion state is determined based on the number of target vehicles (hereinafter referred to as a "use result value") that are parked in the parking lot at a current time and the number of target vehicles (hereinafter referred to as a "use prediction value") that are predicted to be parked in the parking lot after the current time. The use prediction value includes a use prediction value (the number of parked vehicles) predicted using reservation information and a use prediction value (the number of parked vehicles) predicted using information other than reservation information. The information other than reservation information includes a past use result value of the parking lot, a past use result value of the target vehicles, a learned use prediction value that is learned based on a difference between a use result value and a use prediction value, area characteristics near the parking lot, weather information near the parking lot, traffic information near the parking lot, event information near the parking lot, and the like. That is, the use prediction value predicted using the reservation information is information having higher prediction accuracy than the use prediction value predicted using information other than reservation information.

The embodiment of the present invention is not limited thereto, and the congestion state of the parking lot may be represented as a percent of a usage rate of the parking lot, the number of empty spaces of the parking lot or an evaluation value of a degree of congestion of the parking lot. The evaluation value is an evaluation value to evaluate factors that will cause the number of target vehicles parked in the parking lot to increase or decrease in the future. As the evaluation value, a high evaluation value is assigned in advance to a factor having a high probability of increasing the number of parked target vehicles, and a low evaluation value is assigned in advance to a factor having a high probability of decreasing the number of parked target vehicles. The evaluation value may be decided by a plurality of evaluation criteria. For example, an evaluation value obtained based on a criterion of evaluating an increased or decreased amount of the number of parked vehicles predicted from the past use result value or a criterion of evaluating an increased or decreased amount of the number of parked vehicles predicted based on area characteristics and weather, traffic and event information near the parking lot is included. In this case, a sum of evaluation values calculated depending on the plurality of evaluation criteria is information indicating the congestion state of the parking lot.

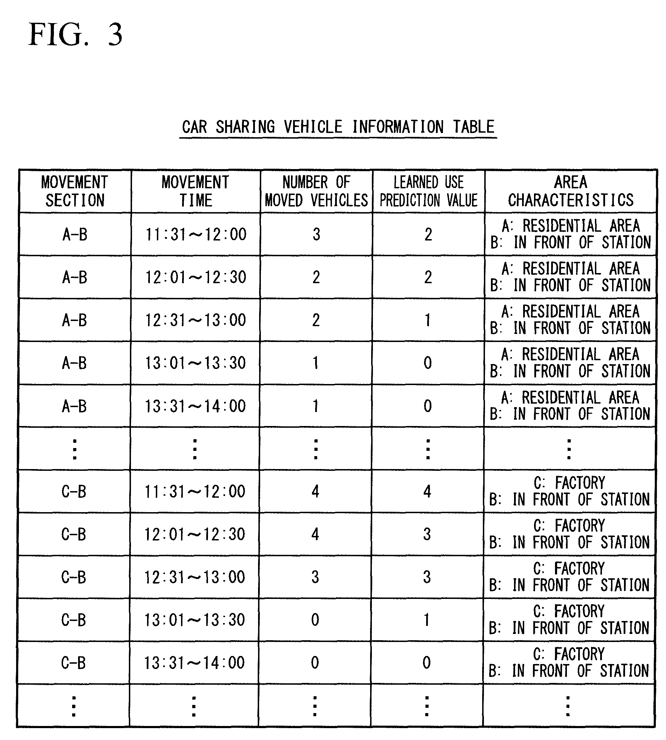

The car sharing vehicle management server 20 includes a car sharing operation database (DB) 21. The car sharing vehicle management server 20 generates information about use of the target vehicles for car sharing and writes the information in a car sharing vehicle information table in the car sharing operation database 21. The information about use of the target vehicles for car sharing includes, for example, movement sections to which the target vehicles actually move, times at which the target vehicles move (movement times), the number of target vehicles that have moved (the number of moved vehicles), and the like as the use result value of the target vehicles. In addition, in the information about use of the target vehicles for car sharing, for example, as a learned use prediction value of the target vehicles, information indicating the number of target vehicles whose use is predicted based on the use result value is included in each movement section at each movement time. The learned use prediction value of the target vehicles is information learned based on a difference between the use result value and the use prediction value by the car sharing management device 10. In addition, the information about use of the target vehicles for car sharing includes information indicating area characteristics of the movement section according to a location of the parking lot. An exemplary car sharing vehicle information table is shown in Fig. 3, and details will be described below with reference to the drawing.

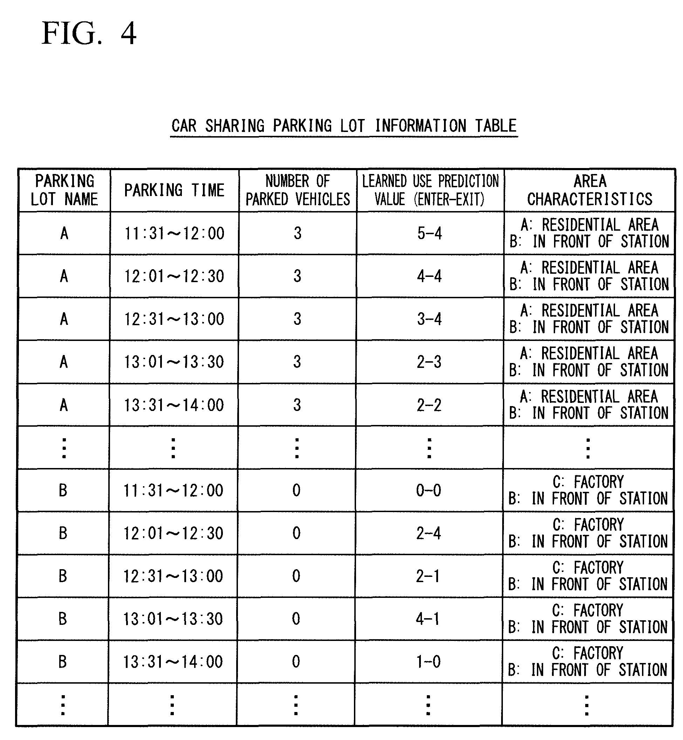

The car sharing parking lot management server 30 includes a parking lot operation database (DB) 31. The car sharing parking lot management server 30 generates information about use of the parking lot in which the target vehicles for car sharing are parked and writes the information in a car sharing parking lot information table in the parking lot operation database 31. The information about use of the parking lot includes, for example, the number of target vehicles parked in the parking lot for a predetermined time period as the use result value of the parking lot. In addition, information about use of a parking lot area includes, for example, the number of vehicles that need to enter and the number of vehicles that need to exit whose uses are predicted based on the use result in each parking lot at each parking time, as a learned use prediction value of the parking lot area. The learned use prediction value of the parking lot area is information learned based on a difference between the use result value and the use prediction value by the car sharing management device 10. In addition, the information about use of the parking lot includes information indicating area characteristics according to a location of each parking lot. An exemplary car sharing parking lot information table is shown in Fig. 4, and details will be described below with reference to the drawing.

The information provision external server 40 is a server configured to transmit weather information indicating weather near each parking lot, information on traffic near each parking lot, and information on special events near each parking lot to the car sharing management device 10.

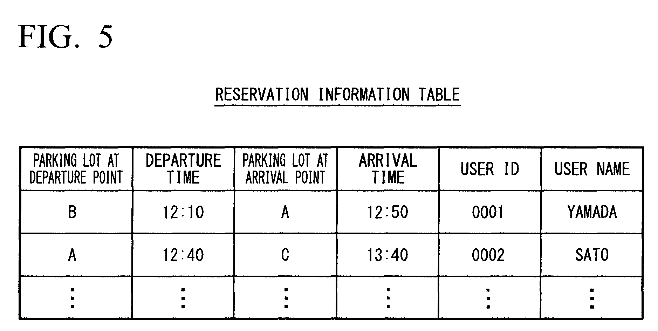

The reservation management server 50 includes a reservation information database (DB) 51. The reservation management server 50 receives a car sharing reservation from a pre-registered user, and writes content of the received reservation in a reservation information table in the reservation information database 51. An exemplary reservation information table is shown in Fig. 5, and details will be described below with reference to the drawing. In the car sharing management system according to the present embodiment, users who can reserve are limited to users who have registered in advance. The pre-registered user is assigned in advance a user identification (ID) serving as user identification information for identifying the user.

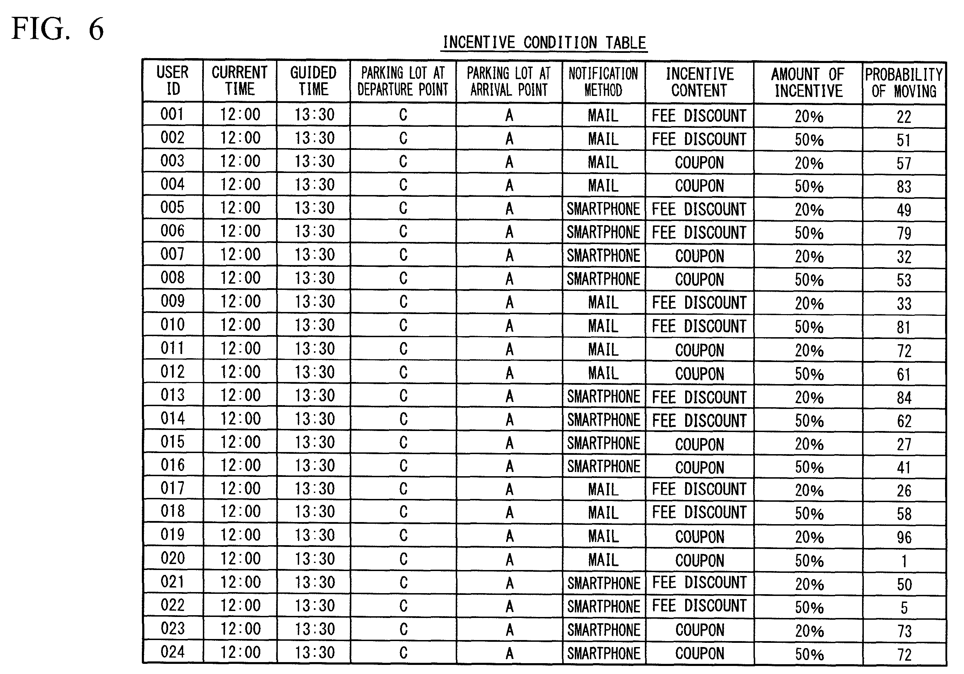

The incentive condition management server 60 includes an incentive condition database (DB) 61. The incentive condition management server 60 writes incentive assigning conditions assigned to each pre-registered user in an incentive condition table in the incentive condition database 61. An exemplary incentive condition table is shown in Fig. 6, and details will be described below with reference to the drawing. The incentive condition management server 60 may receive incentive assigning conditions decided by an administrator, and write the conditions in the incentive condition database 61. The incentive condition management server 60 may also write predetermined incentive assigning conditions depending on the users' characteristics in the incentive condition database 61 in association with a user ID of each user. In addition, the incentive condition database 61 may store incentive conditions (such as an amount of incentive, incentive content and a notification method) learned based on a result value of a previously assigned incentive. The incentive condition database 61 may be updated with incentive conditions learned based on an incentive assigned from the last update at predetermined time intervals or when an incentive is assigned. Accordingly, the incentive condition database 61 can be updated with incentive conditions depending on the latest incentive assigning state at a speed close to real time.

The plurality of terminals 71, 72, and 73 are terminals of pre-registered users, for example, mobile phones or smartphones.

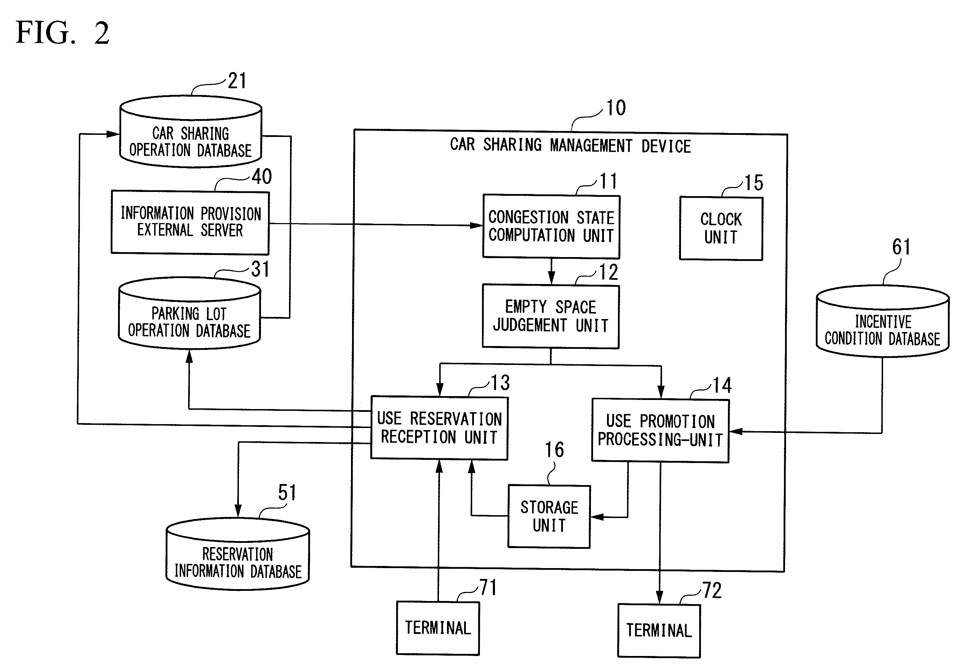

Next, an exemplary configuration of the car sharing management device 10 according to the present embodiment will be described with reference to Fig. 2. Fig. 2 is a block diagram showing an exemplary configuration of the car sharing management device 10 according to the present embodiment.

The car sharing management device 10 includes a congestion state computation unit 11, an empty space judgement unit 12, a use reservation reception unit 13, a use promotion processing-unit 14, a clock unit 15, and a storage unit 16.

The congestion state computation unit 11 determines a congestion state of a parking lot area based on vehicle use information about use of the target vehicles for car sharing and parking lot use information about use of the parking lot area in which the target vehicles are parked.

The congestion state computation unit 11 determines the number of parked target vehicles (the use result value) that are parked in the parking lot at a current time based on reservation information stored in the reservation information database 51.

The congestion state computation unit 11 computes a congestion state from a current time to a judgement target time based on reservation information stored in the reservation information database 51. The judgement target time is a time that is a predetermined length of time after the current time, and is a time defining a range in which a congestion state is determined. In the present embodiment, the congestion state computation unit 11 determines a use prediction value predicted using reservation information as information indicating the congestion state computed based on reservation information. More specifically, the congestion state computation unit 11 determines a value (the use prediction value predicted using reservation information) obtained by subtracting the number of vehicles determined to be rented (the number of vehicles that need to exit) in each parking lot from the current time to the judgement target time from the number of vehicles decided to be dropped off (the number of vehicles that need to enter) at each parking lot from the current time to the judgement target time based on reservation information.

The congestion state computation unit 11 computes a congestion state from the current time to the judgement target time based on information other than reservation information. The information other than reservation information includes, for example, the learned use prediction value stored in the car sharing operation database 21 and the parking lot operation database 31, information (for example, area characteristics near the parking lot, weather information near the parking lot, traffic information near the parking lot, and event information near the parking lot) received from the information provision external server 40 and the like. In the present embodiment, the congestion state computation unit 11 determines a use prediction value predicted using the information other than reservation information as information indicating the congestion state computed based on the information other than reservation information. More specifically, the congestion state computation unit 11 determines a value (a use prediction value predicted using information other than reservation information) by subtracting the number of vehicles predicted to be rented from each parking lot from the current time to the judgement target time (the number of vehicles that need to exit) from the number of vehicles predicted to be dropped off (the number of vehicles that need to enter) at each parking lot from the current time to the judgement target time based on the information other than reservation information.

The congestion state computation unit 11 determines a value in which the use prediction value (including the use prediction value predicted using reservation information and the use prediction value predicted using information other than reservation information) is added with respect to the use result value as the congestion state of the parking lot.

The empty space judgement unit 12 judges whether a parking lot which fully occupied and does not have an empty space for parking the moved target vehicles exists based on the congestion state determined by the congestion state computation unit 11. In other words, the empty space judgement unit 12 judges whether a parking lot area which is presently fully occupied and is impossible to ensure one or more empty spaces, or which is predicted to be occupied in the future and is predicted to be impossible to ensure one or more empty spaces exists based on the congestion state determined by the congestion state computation unit 11. In the present embodiment, the empty space judgement unit 12 creates a list of crowded parking lots (hereinafter referred to as a "crowded parking lot list") predicted to be fully occupied based on the congestion state in the near future a predetermined length of time after the current time. The empty space judgement unit 12 judges whether there is a parking lot in which the number of vehicles that need to enter exceeds the number of vehicles that need to exit until a time at which full occupation is predicted among crowded parking lots included in the created crowded parking lot list. When there is a parking lot in which the number of vehicles that need to enter exceeds the number of vehicles that need to exit until the time at which full occupation is predicted, the empty space judgement unit 12 judges that there is a parking lot which is fully occupied and is impossible to ensure the empty space for parking the moved target vehicles. In other words, even if the parking lot is predicted to be fully occupied, when the number of vehicles that need to exit exceeds the number of vehicles that need to enter, the empty space judgement unit 12 judges that there is a parking lot in which the empty space for parking the moved target vehicles can be ensured. In addition, when there is a parking lot in which the number of vehicles that need to enter exceeds the number of vehicles that need to exit until the time at which full occupation is predicted, the empty space judgement unit 12 determines a time (hereinafter referred to as a "guided time") at which the number of vehicles that need to enter exceeds the number of vehicles that need to exit.

The use reservation reception unit 13 refers to the reservation information database 51 and receives a reservation including return to the parking lot area which is judged to be possible to ensure the empty space for parking the moved target vehicle based on the judgement of the empty space judgement unit 12. More specifically, reservation content is transmitted from the terminal 71 to the car sharing management device 10 via a network. The use reservation reception unit 13 of the car sharing management device 10 receives the reservation content, and judges whether it is possible to perform a reservation in accordance with the received reservation content based on information stored in the reservation information database 51 and judgement of the empty space judgement unit 12. When it is judged that a rentable target vehicle is ensured at a reservation time in the parking lot at the departure point included in the received reservation content and the empty space for parking the moved target vehicle can be ensured at a return time in the parking lot at the arrival point included in the received reservation content, the use reservation reception unit 13 judges that it is possible to perform a reservation in accordance with the received reservation content. The use reservation reception unit 13 replies with the fact that the reservation is possible to the terminal 71.

When it is judged that the rentable target vehicle cannot be ensured at the reservation time in the parking lot at the departure point included in the received reservation content, the use reservation reception unit 13 limits reception of a reservation for rental from the parking lot at the departure point. In addition, when it is judged that the empty space for parking the moved target vehicle cannot be ensured at a return time in the parking lot at the arrival point included in the received reservation content, the use reservation reception unit 13 limits reception of a reservation for dropping off the target vehicle at the parking lot in which it is judged to be fully occupied and impossible to ensure the empty space by the empty space judgement unit 12.

The use promotion processing-unit 14 performs a use promotion process for promoting use of the parking lot (hereinafter referred to as a "use promotion target parking lot") in which it is judged to be fully occupied and impossible to ensure the empty space for parking the moved target vehicle by the empty space judgement unit 12. In order to promote use of the target vehicles parked in the use promotion target parking lot, the use promotion process includes a process in which an announcement regarding use of the target vehicles parked in the use promotion target parking lot is provided to the users and a process in which a predetermined incentive is assigned to the users who use the target vehicles parked in the use promotion target parking lot.

The use promotion processing-unit 14 decides a movement destination (hereinafter referred to as an "available parking lot") to which the target vehicles parked in the use promotion target parking lot can be moved, and selects a user to whom to promote use of the available parking lot from the use promotion target parking lot from the current time to the guided time based on a probability of moving of each user. This process will be described below in detail. The probability of moving is information indicating a probability that the target vehicles parked in the use promotion target parking lot will be used and exit the use promotion target parking lot by the guided time.

The use promotion processing-unit 14 decides a movement destination (that is, the available parking lot) of the target vehicles parked in the use promotion target parking lot based on reservation information stored in the reservation information database 51 and the use prediction value. More specifically, the use promotion processing-unit 14 decides a parking lot that is predicted to have at least one empty space at the guided time using reservation information, and a parking lot that is predicted to have a vehicle that needs to exit by the guided time using the use prediction value even if the parking lot is predicted to be fully occupied at the guided time using reservation information as the available parking lot.

The use promotion processing-unit 14 determines a probability of moving of each user based on information stored in the incentive condition database 61. In the present embodiment, the use promotion processing-unit 14 determines a probability of moving of each user based on incentive assigning conditions when drop-off service at the available parking lot from the use promotion target parking lot is used and the past use result value of each user from the current time to the guided time. For example, as incentive assigning conditions when drop-off service at the available parking lot from the use promotion target parking lot is used from the current time to the guided time, incentive content indicating whether the incentive is assigned in the form of a fee discount or a coupon, and an amount of incentive indicating a percentage of a discounted usage fee are predetermined. The incentive assigning conditions may be updated depending on incentive assignment to each user or an incentive use result value, or decided depending on the user's characteristics. In addition, the same incentive may be uniformly assigned to predetermined users for a campaign period or a use promotion period.

The use promotion processing-unit 14 selects a user to whom to promote use of the target vehicles parked in the use promotion target parking lot which is judged to be fully occupied and impossible to ensure the empty space for parking the moved target vehicles based on the probability of moving. In the present embodiment, the use promotion processing-unit 14 decides a user to whom to promote use of the target vehicles based on the predetermined probability of moving depending on a value obtained by subtracting the number of vehicles that need to exit from the number of vehicles that need to enter the use promotion target parking lot. For example, when the value obtained by subtracting the number of vehicles that need to exit from the number of vehicles that need to enter the use promotion target parking lot is 1, the probability of moving is decided to be 80% or more. When the value obtained by subtracting the number of vehicles that need to exit from the number of vehicles that need to enter the use promotion target parking lot is 2, the probability of moving is decided to be 85% or more. When the value obtained by subtracting the number of vehicles that need to exit from the number of vehicles that need to enter the use promotion target parking lot is 3, the probability of moving is decided to be 90% or more. That is, as the value obtained by subtracting the number of vehicles that need to exit from the number of vehicles that need to enter the use promotion target parking lot becomes higher, it is necessary to move the target vehicle more quickly. Therefore, it is preferable to perform a use promotion process such that the probability of moving becomes higher. Note that the probability of moving may be decided depending on a length of time from the current time to the guided time. That is, as the length of time from the current time to the guided time becomes shorter, since it is necessary to move the target vehicle more quickly, it is preferable to perform the use promotion process such that probability of moving becomes higher.

The clock unit 15 outputs information indicating the current time to the congestion state computation unit 11, the empty space judgement unit 12, the use reservation reception unit 13, and the use promotion processing-unit 14.

The storage unit 16 is a storage unit configured to temporarily store information used by components of the car sharing management device 10.

Next, an exemplary car sharing vehicle information table stored in the car sharing operation database 21 will be described with reference to Fig. 3. Fig. 3 is a diagram showing an exemplary car sharing vehicle information table according to one embodiment of the present invention.

As shown in Fig. 3, the car sharing vehicle information table is a table in which movement sections, movement times, the number of moved vehicles, a learned use prediction value, and area characteristics are stored in association. As described above, the number of moved vehicles is a use result value corresponding to the movement sections and the movement times. In the table shown in Fig. 3, the number of moved target vehicles moved from a parking lot A to a parking lot B, and the number of moved target vehicles moved from a parking lot C to the parking lot B are written for each movement time. In an example shown in Fig. 3, the movement times are predetermined periods of time that are divided at 30-minute intervals. As the use result value, the number of moved vehicles per day may be written in each column of the car sharing vehicle information table, and an average value of the number of moved vehicles for several days may be written in each column of the table.

Next, an exemplary car sharing parking lot information table stored in the parking lot operation database 31 will be described with reference to Fig. 4. Fig. 4 is a diagram showing an exemplary car sharing parking lot information table according to the first embodiment of the present invention.

As shown in Fig. 4, the car sharing parking lot information table is a table in which a parking lot name, parking times, the number of parked vehicles, a learned use prediction value, and area characteristics are stored in association. As described above, the number of parked vehicles is a use result value corresponding to the parking lot name and the parking times. In the table shown in Fig. 4, the number of parked vehicles in the parking lot A and the number of parked vehicles in the parking lot B are written for each parking time. In an example shown in Fig. 4, the parking times are predetermined periods of time that are divided at 30-minute intervals. As the use result value, the number of parked vehicles per day may be written in each column of the car sharing parking lot information table, or an average value of the number of parked vehicles for several days may be written in each column of the table.

Next, an exemplary reservation information table stored in the reservation information database 51 will be described with reference to Fig. 5. Fig. 5 is a diagram showing an exemplary reservation information table according to the first embodiment of the present invention.

As shown in Fig. 5, the reservation information table is a table in which a parking lot at a departure point, a departure time, a parking lot at an arrival point, an arrival time, a user ID serving as user identification information, and a user name are stored in association. The reservation information table is a table in which reservation information for each reservation is associated. When a reservation is canceled, the canceled reservation information is removed from the reservation information table.

Next, an exemplary incentive condition table stored in the incentive condition database 61 will be described with reference to Fig. 6. Fig. 6 is a diagram showing an exemplary incentive condition table according to the first embodiment of the present invention.

As shown in Fig. 6, the incentive condition table is a table in which a user ID, a current time, a guided time, a parking lot at a departure point, a parking lot at an arrival point, a notification method, incentive content, an amount of incentive, and a probability of moving are stored in association.

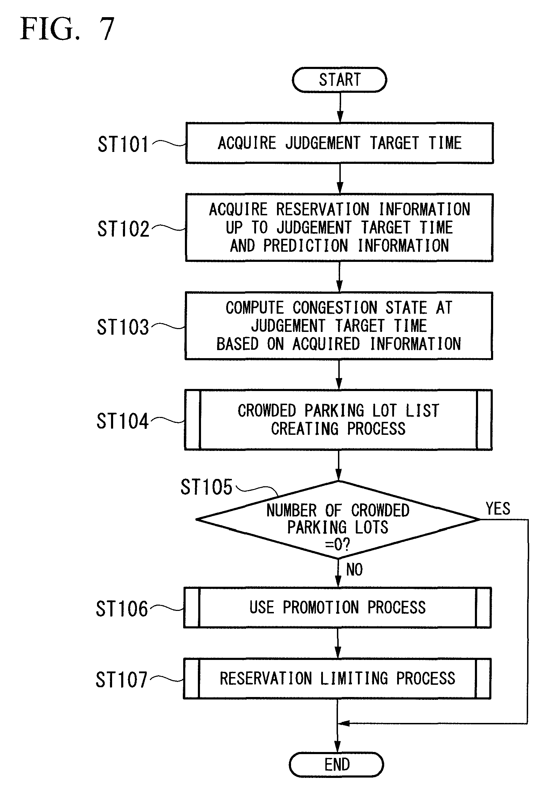

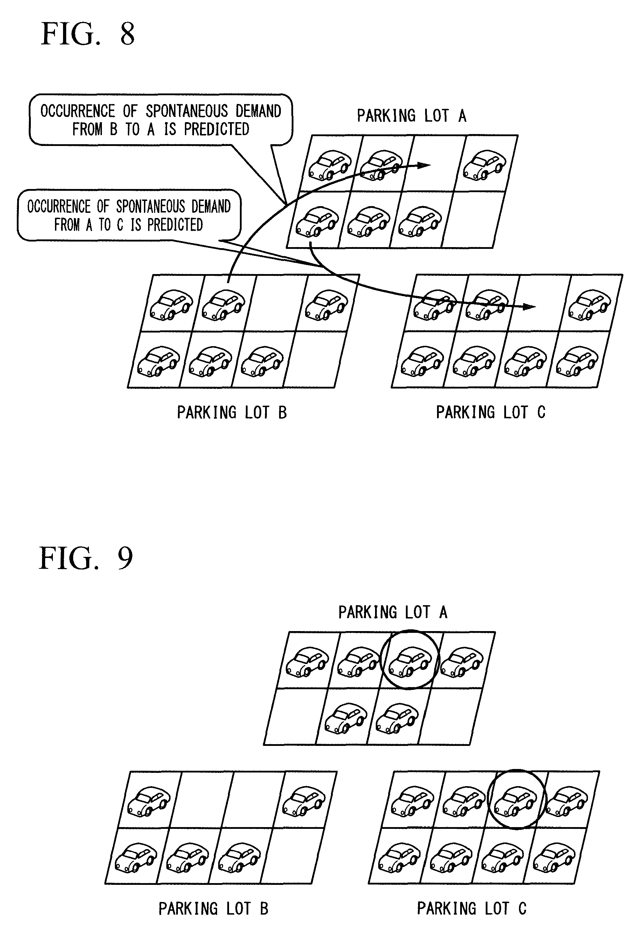

Next, an exemplary car sharing management method according to the first embodiment of the present invention will be described with reference to Fig. 7. Fig. 7 is a flowchart showing an exemplary car sharing management method according to the first embodiment of the present invention. Here, an exemplary car sharing management method will be described using a movement example of the target vehicles in parking lots A, B, and C with reference to Figs. 8 and 9. Fig. 8 is a diagram showing an exemplary parking state of the parking lots A, B, and C at the current time 12:00. Fig. 9 is a diagram showing an exemplary parking state of the parking lots A, B, and C at the judgement target time 14:00.

(Step ST101)

The congestion state computation unit 11 acquires the judgement target time that is in the near future. The congestion state computation unit 11 acquires, for example, a time that is a predetermined length of time after the current time based on the current time output from the clock unit 15 as the judgement target time. In the present embodiment, when the current time is assumed to be 12:00, the congestion state computation unit 11 acquires 14:00 two hours later as the judgement target time.

(Step ST102)

Next, the congestion state computation unit 11 reads reservation information from the current time 12:00 to the judgement target time 14:00 from the reservation information database 51.

(Step ST103)

The congestion state computation unit 11 computes a congestion state from the current time 12:00 to the judgement target time 14:00 based on the reservation information acquired in Step ST102.

The congestion state computation unit 11 determines the number of parked target vehicles (the use result value) that are parked in the parking lot at the current time based on reservation information stored in the reservation information database 51. Here, as shown in Fig. 8, 6 vehicles are parked in the parking lot A, 6 vehicles are parked in the parking lot B, and 7 vehicles are parked in the parking lot C. The congestion state computation unit 11 determines the number of parked vehicles shown in Fig. 8 as a congestion state at the current time 12:00 based on reservation information.

Next, the congestion state computation unit 11 determines the number of parked target vehicles in each parking lot expected from the current time 12:00 to the judgement target time 14:00 based on reservation information.

For example, reservation information in which a parking lot at a departure point B, a parking lot at an arrival point A, the departure time 12:10, and the arrival time 12:50 are designated is stored in the reservation information database 51. In this case, the congestion state computation unit 11 predicts occurrence of a spontaneous demand from the parking lot B to the parking lot A 10 minutes later as a use prediction value predicted using reservation information. That is, the congestion state computation unit 11 determines that the number of parked vehicles in the parking lot B is decreased by one (the number of vehicles that need to exit the parking lot B is increased by one) at 12:10 and the number of parked vehicles in the parking lot A is increased by one (the number of vehicles that need to enter the parking lot A is increased by one) at 12:50.

In addition, reservation information in which a parking lot at a departure point A, a parking lot at an arrival point C, the departure time 12:40 and the arrival time 13:40 are designated is stored in the reservation information database 51. In this case, the congestion state computation unit 11 predicts occurrence of a spontaneous demand from the parking lot A to the parking lot C 40 minutes later as a use prediction value predicted using reservation information. That is, the congestion state computation unit 11 determines that the number of parked vehicles in the parking lot A is decreased by one (the number of vehicles that need to exit the parking lot A is increased by one) at 12:40, and the number of parked vehicles in the parking lot C is increased by one (the number of vehicles that need to enter the parking lot C is increased by one) at 13:40.

The congestion state computation unit 11 determines a congestion state of each parking lot at the judgement target time 14:00 based on reservation information.

More specifically, the congestion state computation unit 11 determines a value obtained by adding 1 (the number of vehicles that need to enter by the judgement target time 14:00) to and subtracting 1 (the number of vehicles that need to exit by the judgement target time 14:00) from 6 (the number of parked vehicles at the current time 12:00) in the parking lot A, that is, 6 (the number of parked vehicles), as the congestion state at the judgement target time 14:00 predicted using reservation information.

In addition, the congestion state computation unit 11 determines a value obtained by subtracting 1 (the number of vehicles that need to exit by the judgement target time 14:00) from 6 (the number of parked vehicles at the current time 12:00) in the parking lot B, that is, 5 (the number of parked vehicles), as the congestion state at the judgement target time 14:00 predicted using reservation information.

In addition, the congestion state computation unit 11 determines a value obtained by adding 1 (the number of vehicles that need to enter by the judgement target time 14:00) to 7 (the number of parked vehicles at the current time 12:00) in the parking lot C, that is, 8 (the number of parked vehicles), as the congestion state at the judgement target time 14:00 predicted using reservation information.

In this manner, the congestion state computation unit 11 determines the number of parked vehicles shown in Fig. 9 as the congestion state at the judgement target time 14:00 predicted using reservation information based on reservation information.

(Step ST104)

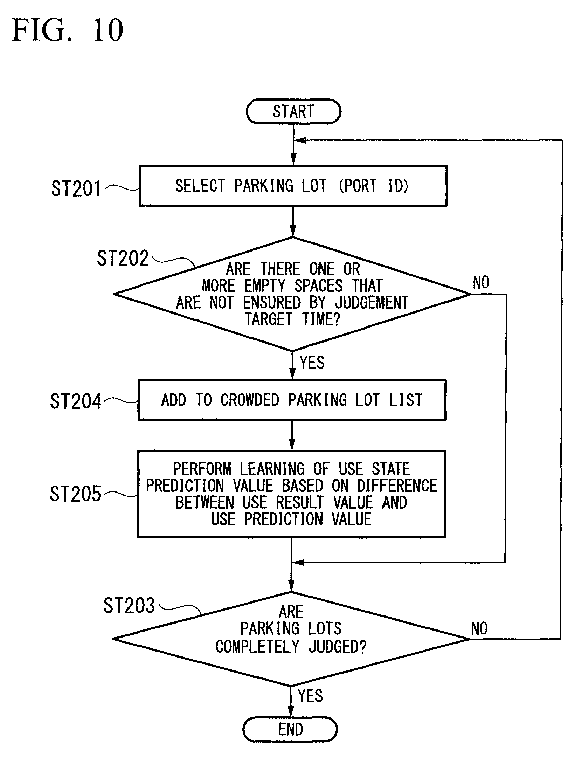

Next, the empty space judgement unit 12 creates a crowded parking lot list including crowded parking lots that are predicted to be fully occupied at the judgement target time 14:00 based on the congestion state predicted using reservation information determined by the congestion state computation unit 11. In the present embodiment, the empty space judgement unit 12 judges a parking lot which is not possible to ensure empty spaces in which one or more target vehicles can be parked as the crowded parking lot according to a value (that is, a prediction value of the number of vehicles that can be parked in the empty space) obtained by subtracting the number of parked vehicles indicated by the congestion state at the judgement target time 14:00 predicted using reservation information from the maximum number of parked vehicles of each parking lot, and creates the crowded parking lot list including the crowded parking lot. The process will be described in detail with reference to Fig. 10.

(Step ST105)

Then, the empty space judgement unit 12 judge whether there are one or more parking lots which is not possible to ensure the empty spaces in which one or more target vehicles can be parked at the judgement target time 14:00.

When there is no parking lot which is not possible to ensure the empty spaces in which one or more target vehicles can be parked at the judgement target time 14:00, the empty space judgement unit 12 ends the process.

(Step ST106)

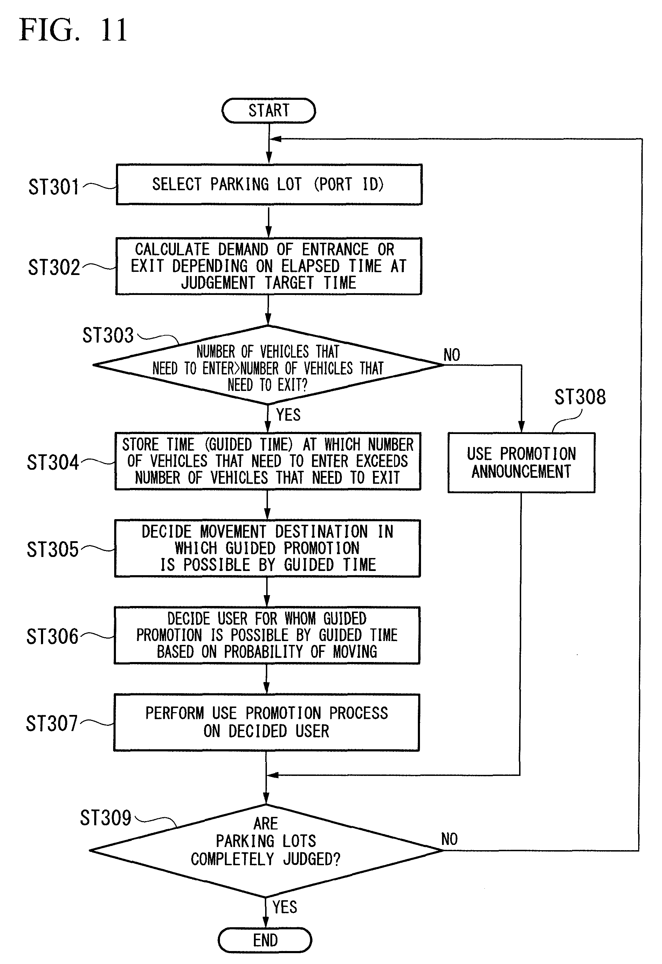

When there are one or more parking lots which is not possible to ensure the empty spaces in which one or more target vehicles can be parked at the judgement target time 14:00, that is, when the empty space judgement unit 12 judges that the empty spaces in which one or more target vehicles can be parked are not possible to be ensured in at least one of parking lots, the use promotion processing-unit 14 performs a use promotion process for promoting use of the parking lot included in the created crowded parking lot list. This process will be described in detail with reference to Fig. 11.

(Step ST107)

Next, the use reservation reception unit 13 performs settings for limiting reception of reservations for dropping off the target vehicles at the parking lot in which it is determined by the empty space judgement unit 12 to be fully occupied and impossible to ensure the empty spaces in which one or more target vehicles can be parked in any parking lot.
Next, an exemplary crowded parking lot list creation process included in the flowchart of Fig. 7 will be described with reference to Fig. 10. Fig. 10 is a flowchart showing an exemplary crowded parking lot list creation process according to the present embodiment.

(Step ST201)

The empty space judgement unit 12 selects one parking lot from among all pre-registered parking lots. For example, the empty space judgement unit 12 selects a parking lot A of port ID=1.

(Step ST202)

The empty space judgement unit 12 judges whether empty spaces in which one or more target vehicles can be parked at the judgement target time 14:00 are ensured in the parking lot A based on the congestion state at the judgement target time 14:00 determined by the congestion state computation unit 11. That is, the empty space judgement unit 12 judges whether the selected parking lot A is predicted to be fully occupied at the judgement target time 14:00.

(Step ST203)

According to the use prediction value predicted using reservation information determined by the congestion state computation unit 11, the number of parked vehicles in the parking lot A at the judgement target time 14:00 is 6. Therefore, in Step ST202, the empty space judgement unit 12 judges that the empty spaces in which one or more target vehicles can be parked at the judgement target time 14:00 are ensured in the parking lot A (NO in Step ST202). Here, when judgement in ST202 is not completed for all parking lots (NO in Step ST203), the process returns to Step ST201, and the empty space judgement unit 12 selects a parking lot B of the next port ID=2 from among all pre-registered parking lots. The empty space judgement unit 12 performs judgement in Step ST202 for all parking lots in accordance with the process in Step ST203. When judgement in Step ST202 is performed for all parking lots (YES in Step ST203), the empty space judgement unit 12 ends the process.

(Step ST204)

According to the use prediction value predicted using reservation information determined by the congestion state computation unit 11, the number of parked vehicles in the parking lot C at the judgement target time 14:00 is 8. Therefore, in Step ST201, the empty space judgement unit 12 judges that the empty spaces in which one or more target vehicles can be parked at the judgement target time 14:00 are not ensured in the parking lot C (YES in Step ST202).
In this case, in Step 204, the empty space judgement unit 12 adds the parking lot C to the crowded parking lot list. That is, the empty space judgement unit 12 judges that the selected parking lot B is predicted to be fully occupied at the judgement target time 14:00, and adds the parking lot C to the crowded parking lot list.

(Step ST205)

The empty space judgement unit 12 performs learning of the learned use prediction values in tables of the car sharing operation database 21 and the parking lot operation database 31 based on a difference between the use result value and the learned use prediction value. The use result value used for the learning process is a value obtained by subtracting the number of parked vehicles in the parking lot A at a predetermined time in the past (for example, 10:00) from the number of parked vehicles in the parking lot A at the current time 12:00. The learned use prediction value is a learned use prediction value written in tables of the car sharing operation database 21 and the parking lot operation database 31 at the current time 12:00.
For example, it is assumed that the use result value of the parking lot A from 10:00 to 12:00 is 3, and the learned use prediction value of the parking lot A from 10:00 to 12:00 is 1. In this manner, when the use result value exceeds the learned use prediction value, the empty space judgement unit 12 rewrites the learned use prediction value associated with a time zone from 10:00 to 12:00 of the parking lot A in the table of the parking lot operation database 31 in the use result value of 3.
In addition, it is assumed that the use result value from the parking lot A to the parking lot B from 10:00 to 12:00 is 1, and the use prediction value from the parking lot A to the parking lot B from 10:00 to 12:00 is 2. In this manner, when the use result value is below the learned use prediction value, the empty space judgement unit 12 does not rewrite the use prediction value from the parking lot A to the parking lot B associated with a time zone from 10:00 to 12:00 in the table of the car sharing operation database 21.

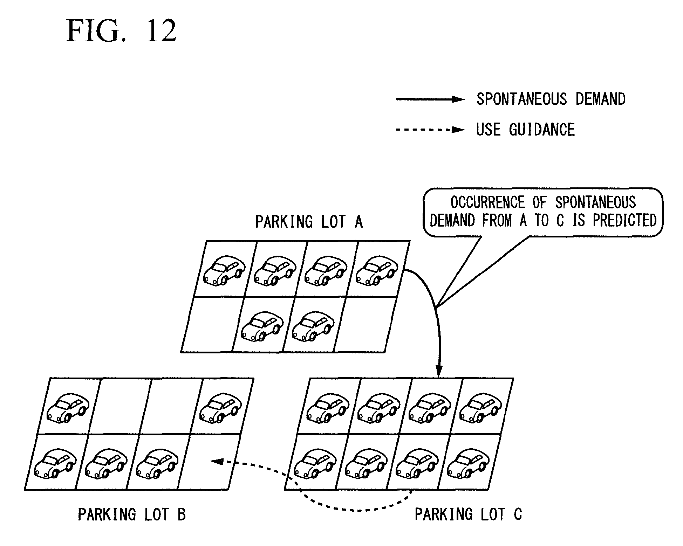

Next, an exemplary use promotion process included in the flowchart of Fig. 7 will be described with reference to Fig. 11. Fig. 11 is a flowchart showing an exemplary use promotion process according to the present embodiment. Here, an exemplary use promotion process will be described using a movement example of the target vehicle in parking lots A, B, and C with reference to Fig. 12. Fig. 12 is a diagram showing an exemplary parking state of the parking lots A, B, and C predicted up to the judgement target time 14:00.

(Step ST301)

The empty space judgement unit 12 selects one parking lot from among parking lots included in the created crowded parking lot list. For example, the empty space judgement unit 12 selects a parking lot C of port ID=3 included in the crowded parking lot list.

(Step ST302)

Next, the congestion state computation unit 11 determines a congestion state (for example, the number of parked target vehicles) of each parking lot expected from the current time 12:00 to the judgement target time 14:00 based on at least one of information (for example, weather information near the parking lot C, traffic information near the parking lot C, and event information near the parking lot C) acquired from the information provision external server 40, information (the learned use prediction value based on drop-off use at the parking lot C, and area characteristics near the parking lot) acquired from the car sharing operation database 21, and information (the learned use prediction value based on use of the parking lot C and area characteristics near the parking lot) acquired from the parking lot operation database 31.

For example, the congestion state computation unit 11 predicts a demand of target vehicles to be moved from the parking lot A to the parking lot C for a movement time zone from 12:00 to 13:30 based on information acquired from the information provision external server 40, information acquired from the car sharing operation database 21 and information acquired from the parking lot operation database 31. In this case, the congestion state computation unit 11 predicts occurrence of a spontaneous demand from the parking lot A to the parking lot C from 12:00 to 13:30 as the use prediction value predicted using information other than reservation information. That is, the congestion state computation unit 11 determines that the number of vehicles that need to exit the parking lot A at 12:00 is increased by one and the number of vehicles that need to enter the parking lot C at 13:30 is increased by one. Therefore, the congestion state computation unit 11 determines a time at which the number of vehicles that need to enter is predicted to increase and a time at which the number of vehicles that need to exit is predicted to increase. The congestion state computation unit 11 associates the determined time with the number of vehicles that need to enter and associates the determined time with the number of vehicles that need to exit.

In this manner, based on the information other than reservation information, the congestion state computation unit 11 determines the number of parked vehicles illustrated in Fig. 12 as the congestion state up to the judgement target time 14:00 predicted from information other than reservation information.

(Step ST303)

Then, the empty space judgement unit 12 compares the number of vehicles that need to enter with the number of vehicles that need to exit, which are determined by the congestion state computation unit 11, and judges whether the number of vehicles that need to enter exceeds the number of vehicles that need to exit.

(Step ST304)

According to the use prediction value predicted using information other than reservation information determined by the congestion state computation unit 11, in the parking lot C, the number of vehicles that need to enter is 1, and the number of vehicles that need to exit is 0. Therefore, the empty space judgement unit 12 judges that the number of vehicles that need to enter exceeds the number of vehicles that need to exit (YES in Step ST303). When it is determined that the number of vehicles that need to enter exceeds the number of vehicles that need to exit, the empty space judgement unit 12 writes a time (hereinafter referred to as a "guided time") at which the number of vehicles that need to enter is predicted to exceed the number of vehicles that need to exit in the storage unit 16 in Step ST304. In the present embodiment, the empty space judgement unit 12 writes the fact that the guided time at which the number of vehicles that need to enter the parking lot C is predicted to exceed the number of vehicles that need to exit the parking lot C is 13:30 in the storage unit 16.

(Step ST305)

Then, the use promotion processing-unit 14 decides a parking lot in which the target vehicle can be parked by the guided time 13:30 as a movement destination (an available parking lot) of the target vehicle parked in the parking lot C based on reservation information stored in the reservation information database 51 and the use prediction value. More specifically, the use promotion processing-unit 14 decides a parking lot which is possible to ensure empty spaces in which one or more target vehicles can be parked at the guided time 13:30 depending on reservation information and a parking lot in which occurrence of a demand for exit before the guided time 13:30 is predicted using the use prediction value even if full occupation is predicted in the parking lot at the guided time 13:30 depending on reservation information as available parking lots. In the present embodiment, since empty spaces in which one or more target vehicles can be parked are ensured at the guided time 13:30 in the parking lots A and B, the use promotion processing-unit 14 decides the parking lots A and B as available parking lots.

(Step ST306)

Next, the use promotion processing-unit 14 selects a user to whom to promote use of the target vehicles parked in the parking lot C by the guided time 13:30 at which the number of vehicles that need to enter exceeds the number of vehicles that need to exit based on the probability of moving.

For example, the use promotion processing-unit 14 determines the probability of moving shown in Fig. 6 for each user.

When a target user range is determined in advance, the use promotion processing-unit 14 determines the probability of moving for each user included in the predetermined range. The target user range is determined according to, for example, a user whose home or work place is near the parking lots A to C or the user's characteristics (such as age and sex).

In addition, the use promotion processing-unit 14 decides a user to whom to promote use of the target vehicles based on the probability of moving determined in advance depending on a value obtained by subtracting the number of vehicles that need to exit from the number of vehicles that need to enter a use promotion target parking lot C. Here, the value obtained by subtracting the number of vehicles that need to exit from the number of vehicles that need to enter the parking lot C is 1. Therefore, the use promotion processing-unit 14 decides a user to whom to promote use of the target vehicles parked in the parking lot B serving as the use promotion target parking lot such that the probability of moving becomes 80% or more.

In an example shown in Fig. 6, when a user ID=003 and a user ID=014 are selected, the use promotion processing-unit 14 determines that the probability of moving of the user ID=003 and the user ID=014 moving the target vehicles from the parking lot C to the parking lot A by the guided time 13:30 is 0.83 (83%). That is, the use promotion processing-unit 14 determines a probability of moving of 0.83 (83%) based on the following equation.

$$1-(0.43 \times 0.38)=0.83$$

Therefore, the use promotion processing-unit 14 selects the user ID=003 and the user ID=014 as users whose probabilities of moving are 80% or more.

(Step ST307)

The use promotion processing-unit 14 provides an announcement of use of the target vehicle parked in the use promotion target parking lot C to the user ID=003 and the user ID=014 according to a notification method stored in the incentive condition database 61. Here, the use promotion processing-unit 14 transmits an announcement mail to a terminal of the user ID=003 and notifies of the fact that a coupon corresponding to 20% of a regular fee is assigned for use of the target vehicles from the parking lot C to the parking lot A until 13:20. In addition, the use promotion processing-unit 14 transmits an announcement message to a terminal (a smartphone) of the user ID=014, and notifies of the fact that a fee discount of 50% from a regular fee is applied for use of the target vehicles from the parking lot C to the parking lot A until 13:20.

When the terminal of the user ID=003 reserves use of the target vehicle from the parking lot C to the parking lot A before 13:20, the use reservation reception unit 13 assigns a coupon corresponding to 20% of a regular fee with reference to the incentive condition database 61. In addition, when the terminal of the user ID=014 reserves use of the target vehicle from the parking lot C to the parking lot A before 13:20, the use reservation reception unit 13 charges a fee to which a fee discount of 50% from a regular fee is applied.

(Step ST308)

In Step ST303, when it is determined that the number of vehicles that need to enter is below the number of vehicles that need to exit (NO in Step ST303), the use promotion processing-unit 14 performs a use promotion process in which an announcement to promote use of the parking lot is posted on the Internet and a mail is transmitted to a user of a car sharing system for notification in Step ST308.

(Step ST309)

Next, the empty space judgement unit 12 judges whether the process in Step ST303 is performed for all parking lots included in the crowded parking lot list. When it is determined that the process in Step ST303 is performed for all parking lots (YES in Step ST309), the empty space judgement unit 12 ends the process. When it is determined that the process in Step ST303 is not performed for all parking lots (NO in Step ST309), the process returns to Step ST301, and the empty space judgement unit 12 selects the next parking lot from among parking lots included in the crowded parking lot list.

The embodiment of the present invention is not limited thereto. For example, the use promotion processing-unit 14 performs learning of incentive conditions depending on characteristics of the user to whom the incentive is assigned, the parking lot, a time zone or days of the week at predetermined time intervals or when the incentive is assigned, based on the incentive assigned from the last update. The use promotion processing-unit 14 transmits the learned incentive conditions to the incentive condition management server 60 via a network. The incentive condition management server 60 updates the incentive condition database 61 based on the received incentive conditions as described above. The learning process performed by the use promotion processing-unit 14 may be performed by the incentive condition management server 60.

As described above, the car sharing management device 10 according to the first embodiment of the present invention judges whether a parking lot which is fully occupied and is impossible to ensure the empty space for parking the moved target vehicles exists based on the congestion state of the parking lot. Accordingly, it is possible to detect the parking lot which is fully occupied and is impossible to ensure the empty space for parking the moved target vehicles among the plurality of parking lots for car sharing, and detect a parking lot in which use of the target vehicles is limited. In addition, it is possible to detect a deviation in the number of parked vehicles between parking lots in the plurality of parking lots.

In addition, the car sharing management device 10 according to the first embodiment of the present invention performs a use promotion process for promoting use of the parking lot which is determined to be fully occupied and impossible to ensure the empty spaces. Accordingly, for example, use of the target vehicles of the parking lot predicted to be fully occupied due to dropped off target vehicles is promoted. Therefore, it is possible to ensure the empty space for parking the moved target vehicles.

When there is a parking lot in which it is difficult to park the target vehicles or when this state continues and use of the parking lot is limited for a long time, choices of return parking lots when the target vehicles are dropped off are limited, and when there is no return parking lot in which drop-off use is possible near a destination, there is a possibility of drop-off use being temporarily limited. The car sharing management device 10 according to the first embodiment of the present invention performs the use promotion process for the parking lot which is not possible to ensure empty spaces. Therefore, it is possible to suppress the parking lot from being impossible to park the target vehicles and suppress a situation in which use of the parking lot is limited for a long time. Accordingly, drop-off use is promoted in car sharing. In addition, by detecting a deviation in the number of parked vehicles between parking lots in the plurality of parking lots, it is possible to promote movement of the target vehicles parked in the parking lot in which it is determined to be fully occupied and impossible to ensure the empty spaces to the parking lot in which it is determined to be possible to ensure the empty spaces.

In addition, the use promotion processing-unit 14 of the car sharing management device 10 according to the first embodiment of the present invention assigns a predetermined incentive for use of the target vehicle parked in the parking lot in which it is determined to be fully occupied and impossible to ensure the empty spaces as the use promotion process. Accordingly, use of the target vehicle is further promoted.

In addition, the use promotion processing-unit 14 of the car sharing management device 10 according to the first embodiment of the present invention selects a candidate (a user) on whom the use promotion process is performed based on the probability of moving determined in advance depending on the incentive assigning conditions. Accordingly, cost management using the incentive is possible, and optimal use promotion is possible in view of costs. For example, when the target vehicles of the parking lot B need to be quickly moved, the car sharing management device 10 can achieve effective use promotion by assigning a higher incentive. In addition, when there is no need to quickly move the target vehicles, the car sharing management device 10 can decrease the incentive to suppress a profit decline due to discount.

In addition, the use reservation reception unit 13 of the car sharing management device 10 according to the first embodiment of the present invention limits reception of reservations for dropping off the target vehicles at the parking lot which is determined to be fully occupied and impossible to ensure the empty spaces. Accordingly, it is possible to prevent the congestion state of the crowded parking lot from becoming worse.

In addition, the congestion state computation unit 11 of the car sharing management device 10 according to the first embodiment of the present invention determines the congestion state of the parking lot area based on a current use state (a use result value) and a predicted use state (a use prediction value) of the parking lot area. Accordingly, it is possible to determine the congestion state more reliably based on the future congestion state.

In addition, the congestion state computation unit 11 of the car sharing management device 10 according to the first embodiment of the present invention determines the congestion state of the parking lot based on at least any one of reservation information of the parking lot, reservation information of the target vehicles, a past use result of the parking lot, a past use result of the target vehicles, area characteristics near the parking lot, weather information near the parking lot, traffic information near the parking lot, and event information near the parking lot. Accordingly, it is possible to predict the congestion state of the parking lot from diverse perspectives.

(Second embodiment)

The car sharing management device 10 according to the second embodiment of the present invention may determine a congestion state of a parking lot area including a plurality of parking lots. The car sharing management device 10 may determine whether a parking lot area which is fully occupied and is impossible to ensure the empty space for parking the moved target vehicle exists based on the determined congestion state. The concept of the parking lot area includes both cases in which one parking lot area includes one parking lot for car sharing and cases in which one parking lot area includes two or more parking lots for car sharing.

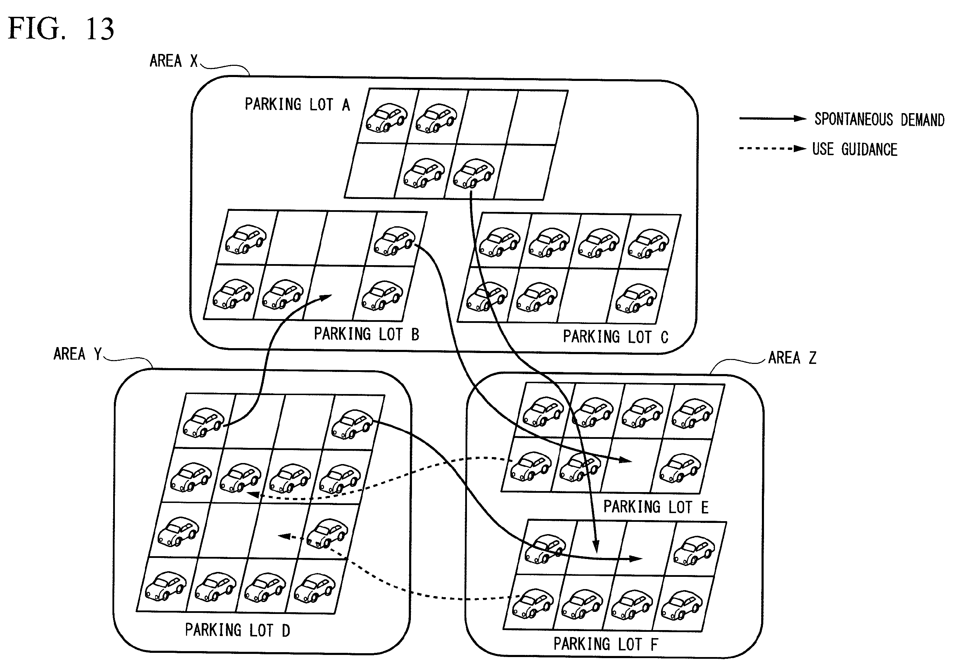

Exemplary parking lot areas will be described with reference to Fig. 13. Fig. 13 is a diagram showing exemplary parking lot areas in the second embodiment of the present invention.

As shown in Fig. 13, a parking lot area X includes parking lots A, B, and C, a parking lot area Y includes a parking lot D, and a parking lot area Z includes parking lots E and F.

Since the car sharing management device 10 according to the present embodiment has the same functions as the car sharing management device 10 according to the first embodiment except that the parking lots are handled in units of parking lot areas, detailed descriptions thereof will be omitted.

In this manner, since it is determined whether a parking lot area which is fully occupied and is impossible to ensure the empty space for parking the moved target vehicles exists in units of parking lot areas, it is possible to comprehensively manage a plurality of parking lots provided near one another. For example, when the parking lots A, B, and C are prepared near a station, the user may consider that any parking lot is preferable as long as it is near the station. In this case, when use promotion is performed in units of parking lot areas, it is possible to achieve the use promotion more flexibly.

(Third embodiment)

When it is determined that there is a parking lot which is fully occupied and is impossible to ensure the empty space for parking the moved target vehicles based on the congestion state, the car sharing management device 10 according to the third embodiment of the present invention may temporarily use a shared parking space prepared in the parking lot in which it is determined to be fully occupied and impossible to ensure the empty space for parking the moved target vehicles as the parking space for car sharing. The shared parking space can be used as a general purpose parking space, is a parking space that can also be used as a parking space for car sharing, and when a general purpose vehicle is not parked, is a parking space in which the target vehicles for car sharing can be parked.

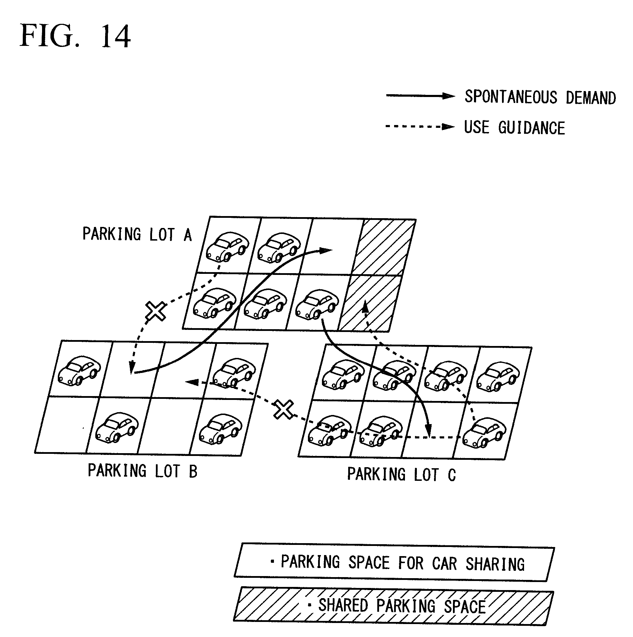

Exemplary parking lots in which both of the shared parking space and the parking space for car sharing are provided will be described with reference to Fig. 14. Fig. 14 is a diagram showing exemplary parking lots in the third embodiment of the present invention.

As shown in Fig. 14, a parking lot A includes shared parking spaces (for 2 vehicles) and parking spaces for car sharing (for 6 vehicles). A parking lot B includes parking spaces for car sharing (for 8 vehicles). A parking lot C includes parking spaces for car sharing (for 8 vehicles).

Here, movement from the parking lot B to the parking lot A and movement from the parking lot A to the parking lot C are assumed to have occurred as spontaneous demands. That is, a reservation in which a parking lot at a departure point B and a parking lot at an arrival point A are designated, and a reservation in which a parking lot at a departure point A and a parking lot at an arrival point C are designated are assumed to have occurred.

In this case, the congestion state of the parking lot A and the parking lot C is severe. In other words, the parking lot A and the parking lot C have high degrees of congestion. On the other hand, the congestion state of the parking lot B is not severe. In other words, the parking lot B has a low degree of congestion.

In addition, according to the use prediction value, a demand for movement from the parking lot A to the parking lot B and movement from the parking lot C to the parking lot B is low. According to the use prediction value, a demand for movement from the parking lot C to the parking lot A is high.

In this case, the use promotion processing-unit 14 of the car sharing management device 10 adds the shared parking space to the parking spaces for car sharing of the parking lot A, and sets the number of vehicles that can be parked in the parking lot A to 8. Accordingly, the car sharing management device 10 can determine the parking lot A as the available parking lot. Therefore, the car sharing management device 10 can perform the use promotion process from the parking lot C to the parking lot A.

Note that the present invention is not limited to the above-described embodiments, and the embodiments may be combined. For example, the second embodiment and the third embodiment may be combined.

In addition, a program for implementing functions of the car sharing management device 10 in the present invention may be stored in a computer-readable storage medium. The program stored in the storage medium may be read in a computer system and executed to perform processes. The term "computer system" herein includes an OS and hardware such as peripheral devices. In addition, the term "computer system" includes a WWW system including a homepage-provision environment (or a display environment). In addition, the term "computer-readable storage medium" refers to a portable medium such as a flexible disk, a magneto optical disc, a ROM, and a CD-ROM, and a storage device such as a hard disk built in the computer system.

Further, the term "computer-readable storage medium" includes a medium that keeps a program for a predetermined time such as a volatile memory (RAM) inside a computer system serving as a server or a client when the program is transmitted through a network such as the Internet or a communication line such as a telephone line.

In addition, the above program may be transmitted to another computer system from a computer system in which the program is stored in a storage device through a transmission medium or carrier waves in the transmission medium. Here, the "transmission medium" configured to transmit the program refers to a medium having a function of transmitting information such as a network (a communication network) such as the Internet or a communication line (a communication wire) such as a telephone line. In addition, the program may implement some of the above-described functions.

Further, the above-described functions may also be implemented in combination with a program already stored in the computer system, which is a so-called differential file (differential program).

[Industrial Applicability]

According to the car sharing management device, the management method, and the program described above, a deviation in the number of parked vehicles in a plurality of parking lots for car sharing is able to be detected.

[Reference Signs List]

| | |
|---|---|
| 10 | car sharing management device |
| 11 | congestion state computation unit |
| 12 | empty space judgement unit |
| 13 | use reservation reception unit |
| 14 | use promotion processing-unit |
| 15 | clock unit |
| 16 | storage unit |
| 20 | car sharing vehicle management server |
| 21 | car sharing operation database |
| 30 | car sharing parking lot management server |
| 31 | parking lot operation database |
| 40 | information provision external server |
| 50 | reservation management server |
| 51 | reservation information database |
| 60 | incentive condition management server |
| 61 | incentive condition database |
| 71 | terminal |
| 72 | terminal |
| 73 | terminal |

**Claims**

1. A car sharing management device, comprising:

   a congestion state computation unit configured to determine a congestion state of a parking lot area based on vehicle use information about use of a target vehicle for car sharing and parking lot use information about use of the parking lot area in which the target vehicle is parked; and
   an empty space judgement unit configured to judge whether a parking lot area which is presently fully occupied or which is predicted to be fully occupied in the future exists based on the congestion state determined by the congestion state computation unit.

2. The car sharing management device according to Claim 1, further comprising a use promotion processing-unit configured to perform a use promotion process for promoting use of the parking lot area which is judged to be fully occupied by the empty space judgement unit.

3. The car sharing management device according to Claim 2,
   wherein, as the use promotion process, the use promotion processing-unit assigns a predetermined incentive for use of a target vehicle parked in the parking lot area which is judged to be fully occupied, or provides an announcement regarding use of the target vehicle parked in the parking lot area which is judged to be fully occupied to a user.

4. The car sharing management device according to Claim 3,
   wherein the use promotion processing-unit selects a candidate on whom the use promotion process is performed based on a predetermined probability of moving depending on incentive assigning conditions.

5. The car sharing management device according to any one of Claims 1 to 4, further comprising a use reservation reception unit configured to restrain reception of a reservation for dropping off the target vehicle at the parking lot area which is determined to be fully occupied by the empty space judgement unit.

6. The car sharing management device according to any one of Claims 1 to 5,
   wherein the congestion state computation unit determines a congestion state of the parking lot area based on a current use state and a predicted use state of the parking lot area.

7. The car sharing management device according to any one of Claims 1 to 6,
wherein the congestion state computation unit determines a congestion state of the parking lot area based on at least any of reservation information of the parking lot area, reservation information of the target vehicle, a past use result of the parking lot area, a past use result of the target vehicle, area characteristics of the parking lot area, weather information of the parking lot area, traffic information near the parking lot area and event information near the parking lot area.

8. A car sharing management method, comprising:

   determining a congestion state of a parking lot area based on vehicle use information about use of a target vehicle for car sharing and parking lot use information about use of the parking lot area in which the target vehicle is parked; and determining whether a parking lot area which is presently fully occupied or which is predicted to be fully occupied in the future exists based on the congestion state.

9. A program causing a computer to function as:

   a congestion state computation unit configured to determine a congestion state of a parking lot area based on vehicle use information about use of a target vehicle for car sharing and parking lot use information about use of the parking lot area in which the target vehicle is parked; and an empty space judgement unit configured to determine whether a parking lot area which is presently fully occupied or which is predicted to be fully occupied in the future exists based on the congestion state determined by the congestion state computation operation.

# FIG. 1

EP 3 040 937 A1

FIG. 2

CAR SHARING OPERATION DATABASE — 21

INFORMATION PROVISION EXTERNAL SERVER — 40

PARKING LOT OPERATION DATABASE — 31

CAR SHARING MANAGEMENT DEVICE — 10

CONGESTION STATE COMPUTATION UNIT — 11

CLOCK UNIT — 15

EMPTY SPACE JUDGEMENT UNIT — 12

INCENTIVE CONDITION DATABASE — 61

USE RESERVATION RECEPTION UNIT — 13

USE PROMOTION PROCESSING-UNIT — 14

STORAGE UNIT — 16

RESERVATION INFORMATION DATABASE — 51

TERMINAL — 71

TERMINAL — 72

EP 3 040 937 A1

# FIG. 3

CAR SHARING VEHICLE INFORMATION TABLE

| MOVEMENT SECTION | MOVEMENT TIME | NUMBER OF MOVED VEHICLES | LEARNED USE PREDICTION VALUE | AREA CHARACTERISTICS |
|---|---|---|---|---|
| A-B | 11:31~12:00 | 3 | 2 | A: RESIDENTIAL AREA<br>B: IN FRONT OF STATION |
| A-B | 12:01~12:30 | 2 | 2 | A: RESIDENTIAL AREA<br>B: IN FRONT OF STATION |
| A-B | 12:31~13:00 | 2 | 1 | A: RESIDENTIAL AREA<br>B: IN FRONT OF STATION |
| A-B | 13:01~13:30 | 1 | 0 | A: RESIDENTIAL AREA<br>B: IN FRONT OF STATION |
| A-B | 13:31~14:00 | 1 | 0 | A: RESIDENTIAL AREA<br>B: IN FRONT OF STATION |
| ⋮ | ⋮ | ⋮ | ⋮ | ⋮ |
| C-B | 11:31~12:00 | 4 | 4 | C: FACTORY<br>B: IN FRONT OF STATION |
| C-B | 12:01~12:30 | 4 | 3 | C: FACTORY<br>B: IN FRONT OF STATION |
| C-B | 12:31~13:00 | 3 | 3 | C: FACTORY<br>B: IN FRONT OF STATION |
| C-B | 13:01~13:30 | 0 | 1 | C: FACTORY<br>B: IN FRONT OF STATION |
| C-B | 13:31~14:00 | 0 | 0 | C: FACTORY<br>B: IN FRONT OF STATION |
| ⋮ | ⋮ | ⋮ | ⋮ | ⋮ |

# FIG. 4

CAR SHARING PARKING LOT INFORMATION TABLE

| PARKING LOT NAME | PARKING TIME | NUMBER OF PARKED VEHICLES | LEARNED USE PREDICTION VALUE (ENTER-EXIT) | AREA CHARACTERISTICS |
|---|---|---|---|---|
| A | 11:31~12:00 | 3 | 5-4 | A: RESIDENTIAL AREA<br>B: IN FRONT OF STATION |
| A | 12:01~12:30 | 3 | 4-4 | A: RESIDENTIAL AREA<br>B: IN FRONT OF STATION |
| A | 12:31~13:00 | 3 | 3-4 | A: RESIDENTIAL AREA<br>B: IN FRONT OF STATION |
| A | 13:01~13:30 | 3 | 2-3 | A: RESIDENTIAL AREA<br>B: IN FRONT OF STATION |
| A | 13:31~14:00 | 3 | 2-2 | A: RESIDENTIAL AREA<br>B: IN FRONT OF STATION |
| ⋮ | ⋮ | ⋮ | ⋮ | ⋮ |
| B | 11:31~12:00 | 0 | 0-0 | C: FACTORY<br>B: IN FRONT OF STATION |
| B | 12:01~12:30 | 0 | 2-4 | C: FACTORY<br>B: IN FRONT OF STATION |
| B | 12:31~13:00 | 0 | 2-1 | C: FACTORY<br>B: IN FRONT OF STATION |
| B | 13:01~13:30 | 0 | 4-1 | C: FACTORY<br>B: IN FRONT OF STATION |
| B | 13:31~14:00 | 0 | 1-0 | C: FACTORY<br>B: IN FRONT OF STATION |
| ⋮ | ⋮ | ⋮ | ⋮ | ⋮ |

FIG. 5

RESERVATION INFORMATION TABLE

| PARKING LOT AT DEPARTURE POINT | DEPARTURE TIME | PARKING LOT AT ARRIVAL POINT | ARRIVAL TIME | USER ID | USER NAME |
|---|---|---|---|---|---|
| B | 12:10 | A | 12:50 | 0001 | YAMADA |
| A | 12:40 | C | 13:40 | 0002 | SATO |
| ⋮ | ⋮ | ⋮ | ⋮ | ⋮ | ⋮ |

FIG. 6

INCENTIVE CONDITION TABLE

| USER ID | CURRENT TIME | GUIDED TIME | PARKING LOT AT DEPARTURE POINT | PARKING LOT AT ARRIVAL POINT | NOTIFICATION METHOD | INCENTIVE CONTENT | AMOUNT OF INCENTIVE | PROBABILITY OF MOVING |
|---|---|---|---|---|---|---|---|---|
| 001 | 12:00 | 13:30 | C | A | MAIL | FEE DISCOUNT | 20% | 22 |
| 002 | 12:00 | 13:30 | C | A | MAIL | FEE DISCOUNT | 50% | 51 |
| 003 | 12:00 | 13:30 | C | A | MAIL | COUPON | 20% | 57 |
| 004 | 12:00 | 13:30 | C | A | MAIL | COUPON | 50% | 83 |
| 005 | 12:00 | 13:30 | C | A | SMARTPHONE | FEE DISCOUNT | 20% | 49 |
| 006 | 12:00 | 13:30 | C | A | SMARTPHONE | FEE DISCOUNT | 50% | 79 |
| 007 | 12:00 | 13:30 | C | A | SMARTPHONE | COUPON | 20% | 32 |
| 008 | 12:00 | 13:30 | C | A | SMARTPHONE | COUPON | 50% | 53 |
| 009 | 12:00 | 13:30 | C | A | MAIL | FEE DISCOUNT | 20% | 33 |
| 010 | 12:00 | 13:30 | C | A | MAIL | FEE DISCOUNT | 50% | 81 |
| 011 | 12:00 | 13:30 | C | A | MAIL | COUPON | 20% | 72 |
| 012 | 12:00 | 13:30 | C | A | MAIL | COUPON | 50% | 61 |
| 013 | 12:00 | 13:30 | C | A | SMARTPHONE | FEE DISCOUNT | 20% | 84 |
| 014 | 12:00 | 13:30 | C | A | SMARTPHONE | FEE DISCOUNT | 50% | 62 |
| 015 | 12:00 | 13:30 | C | A | SMARTPHONE | COUPON | 20% | 27 |
| 016 | 12:00 | 13:30 | C | A | SMARTPHONE | COUPON | 50% | 41 |
| 017 | 12:00 | 13:30 | C | A | MAIL | FEE DISCOUNT | 20% | 26 |
| 018 | 12:00 | 13:30 | C | A | MAIL | FEE DISCOUNT | 50% | 58 |
| 019 | 12:00 | 13:30 | C | A | MAIL | COUPON | 20% | 96 |
| 020 | 12:00 | 13:30 | C | A | MAIL | COUPON | 50% | 1 |
| 021 | 12:00 | 13:30 | C | A | SMARTPHONE | FEE DISCOUNT | 20% | 50 |
| 022 | 12:00 | 13:30 | C | A | SMARTPHONE | FEE DISCOUNT | 50% | 5 |
| 023 | 12:00 | 13:30 | C | A | SMARTPHONE | COUPON | 20% | 73 |
| 024 | 12:00 | 13:30 | C | A | SMARTPHONE | COUPON | 50% | 72 |

EP 3 040 937 A1

# FIG. 7

```
                    ┌──────────┐
                    │  START   │
                    └────┬─────┘
                         │
         ST101 ──┌───────▼────────────────────┐
                 │ ACQUIRE JUDGEMENT TARGET TIME│
                 └───────┬────────────────────┘
                         │
         ST102 ──┌───────▼────────────────────┐
                 │ ACQUIRE RESERVATION INFORMATION│
                 │ UP TO JUDGEMENT TARGET TIME    │
                 │ AND PREDICTION INFORMATION     │
                 └───────┬────────────────────┘
                         │
         ST103 ──┌───────▼────────────────────┐
                 │ COMPUTE CONGESTION STATE AT  │
                 │ JUDGEMENT TARGET TIME        │
                 │ BASED ON ACQUIRED INFORMATION│
                 └───────┬────────────────────┘
                         │
         ST104 ──┌───────▼────────────────────┐
                 │ CROWDED PARKING LOT LIST     │
                 │ CREATING PROCESS             │
                 └───────┬────────────────────┘
                         │
         ST105 ──────────▼──────────
                  ◇ NUMBER OF CROWDED ◇ ──YES──┐
                  ◇ PARKING LOTS      ◇         │
                  ◇ =0?               ◇         │
                         │ NO                   │
         ST106 ──┌───────▼────────────────────┐ │
                 │ USE PROMOTION PROCESS        │ │
                 └───────┬────────────────────┘ │
                         │                       │
         ST107 ──┌───────▼────────────────────┐ │
                 │ RESERVATION LIMITING PROCESS │ │
                 └───────┬────────────────────┘ │
                         │◄──────────────────────┘
                    ┌────▼─────┐
                    │   END    │
                    └──────────┘
```

FIG. 8

OCCURRENCE OF SPONTANEOUS DEMAND
FROM B TO A IS PREDICTED

OCCURRENCE OF SPONTANEOUS DEMAND
FROM A TO C IS PREDICTED

PARKING LOT A

PARKING LOT B

PARKING LOT C

FIG. 9

PARKING LOT A

PARKING LOT B

PARKING LOT C

FIG. 10

START

ST201 — SELECT PARKING LOT (PORT ID)

ST202 — ARE THERE ONE OR MORE EMPTY SPACES THAT ARE NOT ENSURED BY JUDGEMENT TARGET TIME? — NO

YES

ST204 — ADD TO CROWDED PARKING LOT LIST

ST205 — PERFORM LEARNING OF USE STATE PREDICTION VALUE BASED ON DIFFERENCE BETWEEN USE RESULT VALUE AND USE PREDICTION VALUE

ST203 — ARE PARKING LOTS COMPLETELY JUDGED? — NO

YES

END

# FIG. 11

```
                    ┌─────────┐
                    │  START  │
                    └─────────┘
                         │
ST301 ─┐    ┌──────────────────────────────────┐
       └────│   SELECT PARKING LOT (PORT ID)    │
            └──────────────────────────────────┘
                         │
ST302 ─┐    ┌──────────────────────────────────┐
       └────│ CALCULATE DEMAND OF ENTRANCE OR   │
            │ EXIT DEPENDING ON ELAPSED TIME AT │
            │   JUDGEMENT TARGET TIME           │
            └──────────────────────────────────┘
                         │
ST303 ─┐        ╱─────────────────────╲                    NO
       └───────< NUMBER OF VEHICLES THAT >──────────────────┐
                 NEED TO ENTER>NUMBER OF VEHICLES THAT       │
                ╲   NEED TO EXIT?     ╱                      │
                         │ YES                       ST308 ─┐│
                         │                                  ││
ST304 ─┐    ┌──────────────────────────────────┐    ┌──────────────┐
       └────│ STORE TIME (GUIDED TIME) AT WHICH │    │ USE PROMOTION│
            │ NUMBER OF VEHICLES THAT NEED TO   │    │ ANNOUNCEMENT │
            │ ENTER EXCEEDS NUMBER OF VEHICLES  │    └──────────────┘
            │        THAT NEED TO EXIT          │           │
            └──────────────────────────────────┘           │
                         │                                  │
ST305 ─┐    ┌──────────────────────────────────┐           │
       └────│  DECIDE MOVEMENT DESTINATION IN   │           │
            │    WHICH GUIDED PROMOTION         │           │
            │    IS POSSIBLE BY GUIDED TIME     │           │
            └──────────────────────────────────┘           │
                         │                                  │
ST306 ─┐    ┌──────────────────────────────────┐           │
       └────│   DECIDE USER FOR WHOM GUIDED     │           │
            │ PROMOTION IS POSSIBLE BY GUIDED   │           │
            │ TIME BASED ON PROBABILITY OF      │           │
            │            MOVING                 │           │
            └──────────────────────────────────┘           │
                         │                                  │
ST307 ─┐    ┌──────────────────────────────────┐           │
       └────│  PERFORM USE PROMOTION PROCESS    │           │
            │        ON DECIDED USER            │           │
            └──────────────────────────────────┘           │
                         │◄─────────────────────────────────┘
                         │
ST309 ─┐        ╱─────────────────╲                  NO
       └───────<     ARE            >──────────────────┐
                 PARKING LOTS                          │
                ╲ COMPLETELY JUDGED?╱                  │
                         │ YES                         │
                    ┌─────────┐                        │
                    │   END   │                        │
                    └─────────┘                        │
```

FIG. 12

SPONTANEOUS DEMAND

USE GUIDANCE

OCCURRENCE OF SPONTANEOUS DEMAND FROM A TO C IS PREDICTED

PARKING LOT A

PARKING LOT B

PARKING LOT C

FIG. 13

AREA X

PARKING LOT A

PARKING LOT B

PARKING LOT C

AREA Y

AREA Z

PARKING LOT D

PARKING LOT E

PARKING LOT F

SPONTANEOUS DEMAND

USE GUIDANCE

# FIG. 14

→ SPONTANEOUS DEMAND

------► USE GUIDANCE

PARKING LOT A

PARKING LOT B

PARKING LOT C

- PARKING SPACE FOR CAR SHARING

- SHARED PARKING SPACE

## INTERNATIONAL SEARCH REPORT

| International application No. |
|---|
| PCT/JP2014/076533 |

**A. CLASSIFICATION OF SUBJECT MATTER**
*G06Q50/10(2012.01)i*

According to International Patent Classification (IPC) or to both national classification and IPC

**B. FIELDS SEARCHED**

Minimum documentation searched (classification system followed by classification symbols)
G06Q50/10

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 2010-257111 A (Mazda Motor Corp.),<br>11 November 2010 (11.11.2010),<br>paragraphs [0020], [0037] to [0042]<br>(Family: none) | 1,5-9<br>2,3<br>4 |
| Y | JP 2010-119162 A (The Kansai Electric Power Co., Inc.),<br>27 May 2010 (27.05.2010),<br>paragraph [0063]<br>(Family: none) | 2,3 |
| A | JP 2001-76194 A (Toshi Kaizo System Kabushiki Kaisha),<br>23 March 2001 (23.03.2001),<br>entire text; all drawings<br>(Family: none) | 1-9 |

☒ Further documents are listed in the continuation of Box C. ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>18 December 2014 (18.12.14) | Date of mailing of the international search report<br>06 January 2015 (06.01.15) |
|---|---|
| Name and mailing address of the ISA/<br>Japan Patent Office | Authorized officer |
| Facsimile No. | Telephone No. |

Form PCT/ISA/210 (second sheet) (July 2009)

## INTERNATIONAL SEARCH REPORT

International application No.

PCT/JP2014/076533

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2004-178385 A  (Park 24 Co., Ltd.), 24 June 2004 (24.06.2004), entire text; all drawings (Family: none) | 1-9 |

Form PCT/ISA/210 (continuation of second sheet) (July 2009)

**EP 3 040 937 A1**

**REFERENCES CITED IN THE DESCRIPTION**

**Patent documents cited in the description**

- JP 2013209691 A
- JP 2012215921 A
- JP 2013030016 A
- JP 2010170293 A
- JP 2012150654 A